# EUROPÄISCHE PATENTANMELDUNG

(11) **EP 1 251 330 A1**
(43) Veröffentlichungstag der Anmeldung: **23.10.2002**
(21) Anmeldenummer: 02008909.0
(22) Anmeldetag: 20.04.2002
(51) Int. Cl.: G01B 11/06, G01B 11/02

(54) **Verfahren und Vorrichtung zur Bestimmung der Höhe eines Grates**

(30) Priorität: 22.04.2001 DE 10120992; 19.12.2001 DE 10162279
(71) Anmelder: Röder, Gunther, Dipl-.Ing., 67731 Otterbach (DE)
(72) Erfinder: Röder, Gunther, Dipl-.Ing., 67731 Otterbach (DE)
(74) Vertreter: Möbus, Daniela, Dr.-Ing.

(57) **Zusammenfassung**

Ein Verfahren zur Bestimmung der Höhe eines Grates (7), nach dem ein Lichtstrahl (13) auf den Grat (7) gerichtet und die von ihm reflektierte Strahlungsleistung (14) gemessen und daraus die Grathöhe bestimmt wird.

## Beschreibung

Durch Anforderungen an die Qualitäts- und Prozesssicherheit kann es insbesondere bei Stanz- und Schneidwerken erforderlich sein, die Schärfe der Schneidkanten der Werkzeuge oder aber auch die Qualität von Kanten an den mit den Werkzeugen bearbeiteten Werkstücken zu beurteilen. Dabei kann insbesondere auf die Schärfe der Schneidkanten durch Untersuchung der Schneid- oder Stanzkanten am Werkstück geschlossen werden. Die Messung eines Grates kann daher zur indirekten Überwachung der Schneidschärfe von Werkzeugen herangezogen werden.

Grate sind außerdem an Werkstücken im Allgemeinen wegen der Verletzungsgefahr unerwünscht und können an manchen Stellen auch funktionale Schwierigkeiten bereiten. Die Überprüfung auf ein sauberes Entgraten kann daher ebenfalls erforderlich sein. Bisher sind keine speziellen Messgeräte zur Vermessung von Graten bekannt.

Der vorliegenden Erfindung liegt die Aufgabe zugrunde, eine einfache und zuverlässige Möglichkeit der Vermessung von Graten zu schaffen. Insbesondere soll die Grathöhe erfasst werden.

Die Aufgabe wird mit einem Verfahren zur Bestimmung der Höhe des Grates gelöst, das dadurch gekennzeichnet ist, dass ein Lichtstrahl auf den Gratrücken gerichtet und die von ihm reflektierte Strahlungsleistung gemessen und daraus die Grathöhe bestimmt wird. Je höher die reflektierte Strahlungsleistung ist, desto höher muss der Grat sein, da bei einem hohen Grat die Reflexionsfläche größer ist als bei einem niedrigen Grat. Der Lichtstrahl kann dabei vorzugsweise wenigstens annähernd senkrecht zur Gratrückseite eingestrahlt werden. Die in Einstrahlrichtung zurückreflektierte Strahlungsleistung wird gemessen. Das reflektierte Streulicht kann dabei mittels eines Strahlteilers aus dem den Grat beleuchtenden Strahlengang ausgekoppelt und dann ausgewertet werden.

Alternativ kann der Gratrücken durch einen Beleuchtungsstrahlengang unter beliebigem Winkel beleuchtet werden. In die Richtung des vom Grat reflektierten Lichtes wird eine Aufnahmneeinheit angeordnet, die die Strahlungsleistung des reflektierten Lichtes misst.

Um den Gratrücken nicht der Höhe nach abfahren zu müssen, ist es außerdem zweckmäßig, den Grat mit einem Lichtstrahl zu beleuchten, dessen Durchmesser größer als die Höhe des Gratrückens ist. Dann ist die Strahlungsleistung des reflektierten Lichtes von der Projektionsfläche des Strahls auf dem Gratrücken abhängig.

Falls erforderlich, kann der Lichtstrahl durch eine Fokussiereinrichtung auf den Grat gerichtet werden. Bei senkrechter Beleuchtung des Gratrückens kann das reflektierte Streulicht durch dieselbe Fokussiereinrichtung, durch die auch der Beleuchtungsstrahl passiert, wieder aufgenommen werden. Im Falle getrennter Beleuchtung und Aufnahme wird für das Streulicht eine separate Fokussiereinrichtung vorgesehen.

In der Regel ist es ausreichend, die Grathöhe an einzelnen ausgewählten Stellen einer Stanz- oder Schnittkante zu bestimmen, um die Qualität des Schnittes oder des Stanzvorgangs und damit auch die Schärfe des Stanz- oder Schneidewerkzeugs bestimmen zu können.

Vorzugsweise werden dazu der Grat, die Beleuchtungseinrichtung und die Aufnahmeeinheit relativ so zueinander bewegt, dass der Lichtstrahl den Grat quer oder annähernd quer überstreicht. Da der Beleuchtungsstrahl im Allgemeinen eine inhomogene Strahldichte und ein rundes oder elliptisches Strahlprofil aufweist, gibt es in Abhängigkeit von der Position der Beleuchtung ein Maximum der Strahlungsleistung des reflektierten Lichts. Dieses Maximum wird vorzugsweise aus den Messdaten beim Überfahren des Grate ermittelt und zur Bestimmung der Grathöhe herangezogen.

Alternativ kann die für die Auswertung herangezogene Strahlungsleistung in einer definierten Position auf dem Grat aufgenommen werden. Dadurch ist eine reproduzierbare Messung sichergestellt.

Ist jedoch eine Kontrolle der gesamten Schnitt- oder Stanzkante erforderlich, beispielsweise um ein vollständiges Bild des Grates bzw. der Werkzeugschärfe zu bekommen, so kann der Lichtstrahl relativ zum Werkstück derart bewegt werden, dass er den Grat senkrecht oder in einem spitzen Winkel der Länge nach überstreicht.

Da unterschiedliche Werkstückmaterialien das Licht auch unterschiedlich stark reflektieren, kann außerdem eine Kompensation der Reflexionseigenschaften des Werkstückmaterials vorgenommen werden, um exakte Messergebnisse zu erhalten.

Bei gekrümmten Gratrücken kann durch Veränderung der Parameter einer Fokussiereinrichtung im Strahlengang des Beleuchtungsstrahles, wie numerische Apertur und Brennweite, eine möglichst parallele Ausrichtung der vom Gratrücken reflektierten Lichtstrahlen eingestellt werden. Außerdem kann zusätzlich das am Grat vorbei gestrahlte Licht aufgefangen und zur Berechnung der Grathöhe und/oder zur Verstellung der Lichtquelle oder des Werkstücks mit herangezogen werden.

Die erfindungsgemäße Vorrichtung zur Durchführung eines erfindungsgemäßen Verfahrens ist gekennzeichnet durch eine Lichtquelle, einen Detektor zur Aufnahme des vom Grat reflektierten Lichtanteils und Messung der Strahlungsleistung sowie eine Auswerteeinrichtung. Sie kann außerdem eine Fokussiereinrichtung zur Bündelung des Lichtstrahls auf den Grat und/oder zur Aufnahme des Streulichts aufweisen.

Als Lichtquelle kommt beispielsweise ein Laser oder aber auch eine andere näherungsweise punktförmige Leuchtquelle in Frage.

Der Messkopf kann mindestens einen Lichtdetektor aufweisen, der beispielsweise eine einfache Fotodiode, eine Vier-Quadranten-Fotodiode, ein Sekundärelektronenverfielfacher, eine Avalanche-Fotodiode, eine PIN-Diode, eine Diodenzeile oder auch ein CCD-Chip oder ein anderer Pixelmatrix-Fotodetektor sein kann. Bei Verwendung einer Vier-Quadranten-Fotodiode oder bei Verwendung eines CCD-Chips oder dergleichen können die Signale der einzelnen Quadranten bzw. Pixel korreliert ausgewertet werden, wodurch insbesondere bei bewegter Lichtquelle oder bewegtem Werkstück die Verfolgung des Grates mit dem Lichtstrahl kontrolliert werden kann.

Zur möglichst vollständigen Erfassung des Streulichts kann der Messkopf verstellbar in der Vorrichtung angeordnet sein.

Weitere Vorteile ergeben sich, wenn der Durchmesser des Lichtstrahls variierbar ist und die Lichtquelle und/oder das Werkstück verfahrbar und/oder verschwenkbar angeordnet sind. Es lassen sich dann die Messbedingungen optimal an die Größe des Grates anpassen und außerdem die Grathöhe über den gesamten Verlauf einer Schneid- oder Stanzkante vermessen.

Die Auswerteeinrichtung kann in Abhängigkeit von den Messsignalen des Messkopfs die Relativbewegung von Lichtquelle und Werkstück und/oder den Abstand von Lichtquelle und Werkstück und/oder die Verstellung des Strahldurchmessers und/oder die Einstellung des Winkels zwischen Lichtstrahl und Grat steuern. Damit ist eine vollautomatische Vornahme der erforderlichen Messungen gewährleistet.

Die Auswerteeinrichtung kann die ermittelten Messergebnisse anzeigen oder aber auch einen Vergleich mit Referenzwerten vornehmen und nur eine Unter- bzw. Überschreitung von bestimmten Referenzwerten melden.

Um sicherzustellen, dass nur das vom Grat reflektierte Streulicht zur Messung herangezogen wird, kann die Vorrichtung eine hinter dem beleuchteten Grat anordenbare Fläche mit schwarzer oder verspiegelter Fläche aufweisen. Am Grat vorbeistrahlende Lichtanteile werden dadurch absorbiert oder können seitlich wegreflektiert werden, um die Messung nicht durch Rückstreuung von Licht, das nicht vom Grat reflektiert wurde, zu verfälschen. Es besteht allerdings auch die Möglichkeit, eine Einrichtung zur Detektion und Messung des am Grat vorbeistrahlenden Anteils des Lichtstrahls vorzusehen. Durch die Auswertung dieses Lichtanteils ist eine zusätzliche Kontrolle des Messergebnisses, das mit dem zurückreflektierten Anteil durchgeführt wird, möglich. Auch zur Einstellung der Lichtquelle, des Messkopfs und des Werkstücks sowie zur Bewegung des Werkstücks kann die Auswertung des am Grat vorbeistrahlenden Lichtes mit herangezogen werden.

Nachfolgend wird ein bevorzugtes Ausführungsbeispiel einer erfindungsgemäßen Vorrichtung anhand der Zeichnungen näher beschrieben.

Es zeigen:
- Fig. 1: eine schematische Darstellung einer erfindungsgemäßen Messvorrichtung;
- Fig. 2: die Messvorrichtung aus Fig. 1 bei einer Messung der Werkstückreflexion;
- Fig. 3: eine vergrößerte Detaildarstellung der Gratmessung mit der Vorrichtung aus Fig. 1.

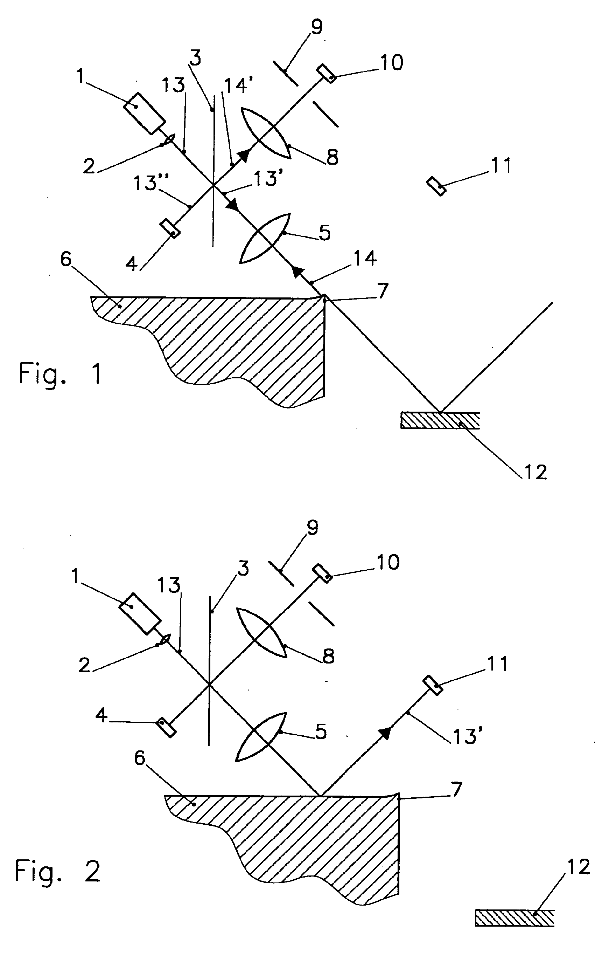

Die in Fig. 1 gezeigte Messanordnung erzeugt ein Messergebnis, das nicht explizit die geometrischen Verhältnisses eines Grates 7 an einem Werkstück 6 beschreibt, sondern das die geometrischen Verhältnisse in ein eindimensionales Messergebnis abbildet, sodass dieses einen verfahrensspezifischen Wert für die Gratform und Grathöhe darstellt. Dessen Interpretation ist durch Kalibration mit Werkstücken mit bekannten Eigenschaften möglich. Alternativ kann das Messergebnis auch theoretisch ermittelt werden, indem aus bekannten Parametern wie Strahlungsleistung, Größe, Form, Position und Strahldichte des Beleuchtungsstrahls sowie der Reflektivität des Werkstückmaterials die Grathöhe berechnet wird. Die Parameter werden bei der Kalibrierung des Gerätes ermittelt.

Die Anordnung besteht aus einer Lichtquelle 1, beispielsweise einem Laser, und vorzugsweise einer Fokussiereinrichtung 2 für den Beleuchtungsstrahl 13, einem Strahlteiler 3, einer Linse oder einer anderen fokussierenden Anordnung 5, zum Beispiel Fresnel-Linsen, Hohlspiegeln oder holografischen Linsen, wodurch die Strahlrichtung auch geändert werden kann, sowie einem Detektor 10, der beispielsweise eine einfache Fotodiode, eine Vier-Quadranten-Fotodiode, einen anderen lichtempfindlichen Diodentyp oder einen CCD-Chip oder anderen Pixelmatrix-Detektor aufweisen kann. Diese Bauteile können auch als Fototransistor oder Fotowiderstand ausgeführt sein.

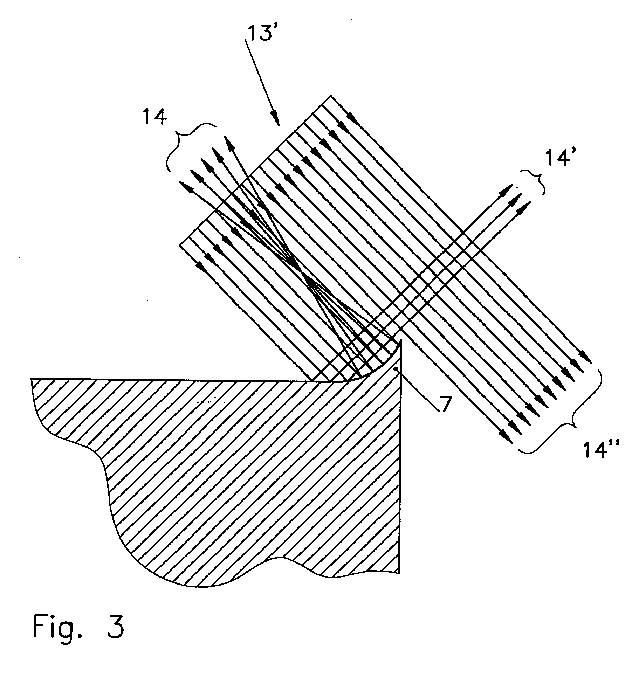

Das aus der Lichtquelle 1 austretende Licht 13 wird kollimiert. Durch die anschließende Fokussierung kann der Strahl 13 vor Erreichen des Strahlteilers 3 einen hier nicht näher dargestellten Fokuspunkt durchlaufen. In diesem Fokuspunkt kann optional eine Blende angebracht werden, die die nicht ausreichend kollimierten Anteile aus dem Strahl 13 eliminiert. Der Strahl 13 fällt dann auf den Strahlteiler 3. Der durchtretende Strahlanteil 13' fällt auf eine Linse oder eine andere fokussierende Einrichtung 5, während der vom Strahlteiler 3 abgelenkte Anteil 13'' auf einen Intensitätsdetektor 4 fällt. Der durchtretende Strahl 13' fällt anschließend auf die Rückseite eines Grates 7, dessen Höhe bestimmt werden soll. Der Einfallswinkel des Strahls sollte dabei möglichst ungefähr 90 ° zur Rückseite des Grates 7 betragen, wie in Fig. 3 illustriert ist, um eine Reflexion 14 in Richtung des einfallenden Lichtes 13' zu erhalten. Das von der beleuchteten Stelle des Grates 17 ausgesendete Streulicht 14 wird von der Fokussiereinrichtung 5 oder aber auch von einer anderen Fokussiereinrichtung aufgefangen und auf den Strahlteiler 3 gelenkt. Es ist von Vorteil, wenn sich der Grat 7 in Beleuchtungsrichtung hinter dem Fokuspunkt der Fokussiereinrichtung 5 befindet, da hier keine reelle Abbildung des Grates entsteht. Eine Messung ist jedoch auch möglich, wenn die Fokussierung mäßig ist. Maßgebend ist, dass die reflektierte Strahlung zu wesentlichen Teilen auf den Detektor 10 trifft.

Ein Teil des Strahls 14 durchtritt den Strahlteiler 3 und ist für die Messung verloren, der abgelenkte Teil 14' wird ausgewertet. Wenn der Grat vor dem Fokuspunkt der Fokussiereinrichtung 5 angeordnet ist, kann eine zusätzliche Fokussiereinrichtung 8 in den Strahlengang 14' nach dem Strahlteiler 3 gesetzt werden und so für eine Abbildung auf dem Detektor 10 sorgen. Der abgelenkte Strahl 14' durchläuft optional zuvor eine Blende 9. Dadurch werden bei guter Fokussierung Fremdlichtstörungen auf dem Detektor 10 verringert. Der Detektor 10 kann als einzelne Fotodiode oder als Empfänger mit lateral getrennten fotoempfindlichen Flächen aufgebaut sein. Der Empfänger liegt in oder in der Nähe der Bildebene der Abbildung der beleuchteten Stelle des Grates, sodass die mehr oder minder scharfe Abbildung des Grates auf der oder den fotoempfindlichen Flächen zu liegen kommt.

Der Effekt, der für die verfahrensspezifische Messung der Grathöhe genutzt wird, besteht darin, dass von einem hohen Grat aufgrund der größeren Fläche mehr Streulicht reflektiert wird als von einem niedrigen Grat. Je größer also die reflektierte Strahlungsleistung, umso größer auch die Grathöhe.

Um zu verhindern, dass am Grat 7 vorbeistrahlendes und vom Hintergrund zurückreflektiertes Licht das Messergebnis oder aber auch die Steuerung der Bewegung der Messeinrichtung stört, kann in Strahlrichtung 13 hinter dem Grat 7 ein Spiegel 12 oder auch eine Fläche mit schwarzer Oberfläche angeordnet sein, die den Lichtanteil 14" (Fig. 3), der am Grat 7 vorbeistrahlt, seitlich wegreflektiert bzw. absorbiert. Mit dem vom Spiegel 12 wegreflektierten Licht kann jedoch auch eine Kontrollmessung durchgeführt werden. Auch die Strahlungsleistung dieses Lichtanteils ist abhängig von der Grathöhe.

Es kann auch die unterschiedlich starke Reflexion je nach Materialbeschaffenheit des Werkstücks 6 bei der Messung und der Bewegungssteuerung kompensiert werden. Gemäß Fig. 2 wird hierzu die Messanordnung nicht auf den Grat 7, sondern auf eine beliebige Oberfläche des Werkstücks 6 in einem spitzen Winkel gerichtet und der reflektierte Strahl 13' mit einer weiteren Detektoreinrichtung 11 aufgenommen und ausgewertet.

Mit der bisher beschriebenen Einrichtung kann ein einzelner Punkt eines Grates 7 vermessen werden. Es gibt jedoch durchaus Anwendungsfälle, bei denen es sinnvoll ist, die Grathöhe einer Stanz- oder Schneidekante entlang der gesamten Kante zu vermessen. Dazu kann die optische Messeinrichtung der Kante nachgeführt werden. Die Messeinrichtung wird dabei relativ zur Kante mit dem Grat lateral beweglich befestigt und die Messeinrichtung oder die Kante bewegt.

Eine Möglichkeit, die Nachführung zu erreichen, besteht darin, den Grat auf eine Vier-Quadranten-Diode oder einen anderen Detektor mit mehreren, voneinander unabhängigen fotoempfindlichen Messflächen abzubilden. Wird nun die optische Messanordnung verschoben, so verschiebt sich auch die Abbildung auf dem Detektor. Voraussetzung für die Messbarkeit dieses Vorgangs ist es, dass die Abbildung des relevanten Teils des Grates den Detektor maximal vollständig ausleuchtet. Dann kann bei Verschiebung der Kante relativ zur Messeinheit vom Detektor 10 eine Verschiebung der Abbildung des Grates gemessen werden. Anhand der Reaktion der einzelnen fotoempfindlichen Flächen kann festgestellt werden, in welcher Richtung bezüglich der Bewegungsrichtung des optischen Detektors 10 die Schneid- oder Stanzkante verläuft. Die Messung kann entlang oder auch quer zum Grat stattfinden oder eine Kombination dieser beiden Fälle sein. Die Größe der beleuchteten Stelle auf dem und um den Grat wird durch eine Blende oder mittels Verändern des Abstandes von der Linse so eingestellt, dass die Kante mit dem Grat 7 auf diesem Stück als annähernd gerade betrachtet werden kann. Die Zuordnung zwischen der Bewegungsrichtung der Abbildung des Grates auf dem Detektor 10 und dem Quadranten ergibt sich aus deren lateraler Orientierung und der relativen Bewegungsrichtung des Messkopfes bezüglich der Kante. Die Erkennung der Bewegung der Abbildung des Grates lässt sich dadurch realisieren, dass die Messwerte von benachbarten Quadranten oder fotoempfindlichen Flächen des Messkopfes ausgewertet werden.

Eine weitere Möglichkeit zur Verfolgung des Grates 7 entlang einer Kante besteht darin, zur Beleuchtung einen Strahl 13 mit nicht gleichmäßiger, zum Beispiel gausscher Strahldichte zu verwenden. Wenn man den Lichtstrahl auf den Grat 7 richtet und die optische Messeinrichtung verfährt, so wird in Querrichtung zum Grat die reflektierte Strahlungsleistung abnehmen, da Teile des Strahls mit hoher Strahldichte vom Grat wegwandern und auf der Gegenseite Teile des Strahls mit geringer Strahldichte auf dem Grat zu liegen kommen. In Längsrichtung ist die Differenz beim Verfahren im allgemeinen geringer. Auf dieser Basis kann die Richtung der Kante mit dem Grat 7 durch probeweises Verfahren im Bezug auf die Achsen der Verfahreinrichtung bestimmt werden und in dieser Richtung der Grat 7 abgetastet werden. Nach einigen Schritten ist im Allgemeinen erneut probeweises Verfahren der optischen Messeinrichtung quer zur Kantenrichtung erforderlich, um Biegungen und Fehler in der Richtungsbestimmung sowie Fehler der Verfahreinrichtung, zum Beispiel Schrittweitenfehler, Abweichungen von der idealen, zum Beispiel rotationssymmetrischen Intensitätsverteilung des Strahls auszugleichen.

Wenn die Kante mit dem Grat 7 nicht in einer Ebene liegt, kann eine weitere Bewegungsachse eingesetzt werden, die die optische Messeinrichtung in Strahlrichtung bewegt. Ferner wird ein Fokusdetektor benötigt, der erkennt, wenn die Abbildung auf dem Detektor 10 unscharf wird. Dazu wird ein Teil des reflektierten Streulichts zum Beispiel mit einem Strahlteiler ausgekoppelt und auf einen Fokusdetektor gelenkt. Dieser ist so ausgelegt, dass er erkennen kann, ob die Abbildung des Grates 7 auf oder in der Nähe des Fotodetektors zu liegen kommt. Die Fokusachse wird anhand des Signals des Fokusdetektors so geregelt, dass die Abbildung auf dem Detektor oder in seiner Nähe zu liegen kommt. Dadurch kann eine dreidimensionale Verfolgung und Vermessung eines Grates 7 vorgenommen werden. Der Fokusdetektor kann zum Beispiel mit einer schräggestellten Linse und einer Vier-Quadranten-Diode, auf der sich bei Verschiebung des Fokus je nach Richtung eine ovale Verzerrung des einfallenden Strahls in sagittale oder meridionale Richtung ergibt, ausgestattet sein. Die Fokusabweichung lässt sich durch die Differenz der Summen der Lichtströme auf die diagonal gegenüberliegenden Quadranten bestimmen. Dies ist ein in der CD-Spieler-Technik gebräuchliches Verfahren. Ein anderes Verfahren zur Fokusdetektion, welches hier eingesetzt werden kann, ist die Verwendung von zwei Prismen, die das einfallende Licht in Abhängigkeit des Einfallswinkels brechen. Der so geteilte Lichtstrahl wird auf zwei positionsempfindliche Detektoren gelenkt. Da der Winkel des einfallenden Lichtes mit Fokusänderungen einhergeht, werden deren Messergebnisse als Maß für die Fokusabweichung herangezogen. Die Ausgangssignale des Fokusdetektors dienen als Regelgröße für eine Fokuslageregelung mittels der Fokusachse. Die Regelung kann zum Beispiel elektronisch als analoge oder digitale Regelung ausgeführt sein. Das Stellglied ist der Antrieb der Fokusachse, der zum Beispiel mit Schritt- oder Servomotoren und einer Gewindespindel realisiert werden kann. Die Reihe der Positionen des Fokusflecks kann zur Bestimmung der dreidimensionalen Form des Kantenverlaufs genutzt werden.

Fig. 3 illustriert, dass die Rückseite des Grates 7 auch konvex oder konkav gebogen sein kann. Ist die Rückseite des Grates 7 eben, so werden die einfallenden parallelen Lichtstrahlen 13' als ebenfalls parallele Lichtstrahlen 14 zurückreflektiert. Bei einer konkaven Ausbildung kommt es zu der dargestellten Bündelung und anschließenden Divergenz der reflektierten Lichtstrahlen 14. Da für die Auswertung parallel gerichtete reflektierte Lichtstrahlen 14 von Vorteil sind, kann es zweckmäßig sein, durch die Fokussiereinrichtung 5 den einfallenden Lichtstrahl 13' so vorzuverzerren, dass die Lichtstrahlen nicht mehr parallel auf den Grat 7, sondern konvergierend oder sich divergierend auftreffen, sodass die reflektierten Lichtstrahlen 14 dann wenigstens annähernd parallel sind.

## Patentansprüche

1. Verfahren zur Bestimmung der Höhe eines Grates (7), **dadurch gekennzeichnet, dass** ein Lichtstrahl (13) auf den Gratrücken (7) gerichtet und die von ihm reflektierte Strahlungsleistung gemessen und daraus die Grathöhe bestimmt wird.

2. Verfahren nach Anspruch 1, **dadurch gekennzeichnet, dass** der Lichtstrahl (13, 13') wenigstens annähernd senkrecht auf die Gratrückseite eingestrahlt und die in Strahlrichtung zurückreflektierte Strahlunsleistung (14) gemessen wird.

3. Verfahren nach Anspruch 2, **dadurch gekennzeichnet, dass** das reflektierte Streulicht (14) mittels eines Strahlteilers (3) aus dem den Grat beleuchtenden Strahlengang (13, 13') ausgekoppelt wird.

4. Verfahren nach einem der Ansprüche 1 bis 3, **dadurch gekennzeichnet, dass** der Grat (7) mit einem Lichtstrahl (13, 13') beleuchtet wird, dessen Durchmesser größer als die Höhe des Gratrückens ist.

5. Verfahren nach einem der Ansprüche 1 bis 4, **dadurch gekennzeichnet, dass** der Lichtstrahl (13) durch eine Fokussiereinrichtung (5) auf den Grat (7) gerichtet wird.

6. Verfahren nach Anspruch 5, **dadurch gekennzeichnet, dass** das reflektierte Streulicht (14) durch dieselbe Fokussiereinrichtung (5), durch die auch der Lichtstrahl (13) passiert, wieder aufgenommen wird.

7. Verfahren nach einem der Ansprüche 1 bis 6, **dadurch gekennzeichnet, dass** der Lichtstrahl (13, 13') relativ zum Werkstück (6) derart bewegt wird, dass er den Grat (7) senkrecht oder in einem spitzen Winkel der Länge nach überstreicht.

8. Verfahren nach einem der Ansprüche 1 bis 7, **dadurch gekennzeichnet, dass** eine Kompensation der Reflexionseigenschaften des Werkstückmaterials vorgenommen wird.

9. Verfahren nach einem der Ansprüche 1 bis 8, **dadurch gekennzeichnet, dass** bei gekrümmtem Gratrücken durch Veränderung der Parameter einer Fokussiereinrichtung (5) im Strahlengang des Beleuchtungsstrahls (13, 13'), wie numerische Apertur und Brennweite, eine möglichst parallele Ausrichtung der vom Gratrücken reflektierten Lichtstrahlen (14) eingestellt wird.

10. Verfahren nach einem der Ansprüche 1 bis 9, **dadurch gekennzeichnet, dass** zusätzlich das vom Grat (7) nicht reflektierte Licht (14'') aufgefangen und zur Bestimmung der Grathöhe und/oder zur Bewegung der Lichtquelle (1) oder des Werkstücks (6) mit herangezogen wird.

11. Vorrichtung zur Durchführung eines Verfahrens nach einem der Ansprüche 1 bis 10 zur Bestimmung der Höhe eines Grates (7) eines Werkstücks, **gekennzeichnet durch** eine Lichtquelle (1), einen Detektor (10) zur Aufnahme des vom Grat (7) reflektierten Lichtanteils (14) und Messung seiner Strahlungsleistung und eine Auswerteeinrichtung.

12. Vorrichtung nach Anspruch 11, **dadurch gekennzeichnet, dass** sie eine Fokussiereinrichtung (5) zur Bündelung des Lichtstrahls (13, 13') auf den Grat (7) und/oder zur Aufnahme des Streulichts (14) aufweist.

13. Vorrichtung nach Anspruch 11 oder 12, **dadurch gekennzeichnet, dass** der Detektor (10) mindestens eine Fotodiode aufweist.

14. Vorrichtung nach Anspruch 11 oder 12, **dadurch gekennzeichnet, dass** der Detektor (10) eine Vier-Quadranten-Fotodiode, einen Sekundärelektronenvervielfacher, eine Avalanche-Fotodiode, eine PIN-Diode oder eine Diodenzeile aufweist.

15. Vorrichtung nach Anspruch 11 oder 12, **dadurch gekennzeichnet, dass** der Detektor (10) einen CCD-Chip oder einen anderen Pixelmatrix-Fotodetektor aufweist.

16. Vorrichtung nach einem der Ansprüche 11 bis 15, **dadurch gekennzeichnet, dass** der Detektor (10) verstellbar angeordnet ist.

17. Vorrichtung nach einem der Ansprüche 11 bis 16, **dadurch gekennzeichnet, dass** die Lichtquelle (1) ein Laser ist.

18. Vorrichtung nach einem der Ansprüche 11 bis 17, **dadurch gekennzeichnet, dass** die Lichtquelle (1) und/oder das Werkstück (6) verfahrbar und/oder verschwenkbar angeordnet sind.

19. Vorrichtung nach einem der Ansprüche 11 bis 18, **dadurch gekennzeichnet, dass** der Durchmesser des Lichtstrahls (13) oder des Beleuchtungsstrahls (14) oder des Fokusflecks im Strahlengang nach der Fokussiereinrichtung (5) variierbar ist.

20. Vorrichtung nach einem der Ansprüche 11 bis 19, **dadurch gekennzeichnet, dass** die Auswerteeinrichtung in Abhängigkeit von den Messsignalen des Detektors (10) die Relativbewegung von Lichtquelle (1) und Werkstück (6) und/oder den Abstand von Lichtquelle (1) und Werkstück (6) und/oder die Verstellung des Strahldurchmessers und/oder die Einstellung des Winkels zwischen Lichtstrahl (13') und Grat (7) steuert.

21. Vorrichtung nach einem der Ansprüche 11 bis 20, **dadurch gekennzeichnet, dass** sie eine hinter dem beleuchteten Grat (7) anordenbare Fläche (12) mit schwarzer oder verspiegelter Fläche aufweist.

22. Vorrichtung nach einem der Ansprüche 11 bis 21, **dadurch gekennzeichnet, dass** die Auswerteeinrichtung einen Vergleich der Messsignale mit Referenzwerten vornimmt.

23. Vorrichtung nach einem der Ansprüche 11 bis 22, **dadurch gekennzeichnet, dass** sie eine Einrichtung zur Detektion des vom Grat (7) nicht reflektierten Anteils (14'') des Lichtstrahls (13') aufweist.
